# FASCICULE DE BREVET EUROPEEN

(11) **EP 2 234 740 B1**
(45) Date de publication et mention de la délivrance du brevet: **07.09.2016**
(21) Numéro de dépôt: 08860908.6
(22) Date de dépôt: 01.12.2008
(51) Int. Cl.: B21C 23/08, B60R 19/02, B60R 19/18, B60R 19/34

(54) **TRAVERSE AVANT POUR VÉHICULE AUTOMOBILE**
VORDERE QUERTRÄGER FÜR KRAFTFAHRZEUG
FRONT CROSSBAR FOR AUTOMOBILE

(30) Priorité: 19.12.2007 FR 0759976
(43) Date de publication de la demande: 06.10.2010
(73) Titulaire: Renault S.A.S., 92100 Boulogne-Billancourt (FR)
(72) Inventeur: LE GOFF, Marc, 28700 Le Gue De Longroi (FR)
(74) Mandataire: Rougemont, Bernard
(86) Numéro de dépôt international: PCT/EP2008/066507
(87) Numéro de publication internationale: WO 2009/077313

(56) Documents cités:
- EP-A- 1 219 499
- EP-A- 1 595 749
- US-A- 4 563 028

## Description

La présente invention concerne une traverse avant pour véhicule automobile, destinée à être fixée à l'extrémité antérieure des longerons du véhicule.

Plus particulièrement, l'invention concerne une traverse avant de la structure d'un véhicule permettant notamment la répartition des efforts lors d'une collision, et sur laquelle des accessoires, comme un avertisseur sonore ou des projecteurs, peuvent être fixés. L'invention concerne aussi un procédé de réalisation d'une telle traverse.

On connaît des solutions de fixation d'accessoires sur la face avant d'un véhicule par l'intermédiaire de pièces intercalaires fixées sur les longerons ou sur la traverse avant du véhicule.

Le document US 2005/0017520 décrit ainsi un élément de support en matériau polymère moulé se fixant sur la traverse avant d'un véhicule par emboîtement. Cet élément possède différents sites de fixation permettant de monter du câblage électrique, une plaque d'immatriculation ou un dispositif d'éclairage par exemple.

Cependant, une opération supplémentaire allongeant le temps de montage est nécessaire pour fixer cet élément intercalaire entre la traverse et les différents accessoires.

De plus il est parfois souhaitable de limiter le nombre de pièces supplémentaires afin de dégager un espace à l'avant du radiateur du moteur pour permettre une meilleure circulation de l'air de refroidissement
Le document EP1219499 propose une traverse dans laquelle les parois supérieure 16 et inférieure 24 se prolongent au-delà de la section principalement rectangulaire de la structure tubulaire de la traverse.

Le document EP1595749 propose une traverse dont la paroi arrière 120 comporte une partie coudée à 90 degrés qui s'étend au dessus et en dessous de la section principalement rectangulaire de la structure tubulaire de la traverse, et cette partie coudée se prolonge sensiblement horizontalement le long des parois supérieures 130 et 140.

Le document US4563028 propose une traverse extrudée de section principalement rectangulaire, et qui comporte une paroi qui s'étend perpendiculairement au dessus de la paroi supérieure (par exemple 11a) de la traverse destinée à la fixation du pare-chocs, et une paroi arrière sur laquelle est fixée une platine de montage d'un accessoire.

Le but de l'invention est donc de proposer une traverse avant améliorée permettant le montage d'accessoire sans élément de support intermédiaire.

A cet effet l'invention propose une traverse avant de véhicule automobile, comprenant une structure tubulaire en tôle mise en forme de manière à obtenir une section principalement rectangulaire, et présentant au moins une paroi arrière de la traverse possède une portion se prolongeant au-delà de la section principalement rectangulaire de la structure tubulaire de la traverse, sensiblement verticalement au-delà de la paroi supérieure, formant une ailette le long de la traverse.

Selon d'autres caractéristiques de l'invention, l'ailette peut posséder des zones découpées de manière à obtenir au moins une patte de fixation entre ces zones découpées.

L'ailette peut aussi posséder des perforations permettant la fixation d'accessoires.

La traverse peut présenter trois parois formant une section en U dont une première paroi s'étendant d'une première arête de la traverse vers un premier coude de la traverse, une seconde paroi prolongeant le premier coude vers un second coude de la traverse et une troisième paroi prolongeant le second coude vers un troisième coude de la traverse, ainsi qu'une quatrième paroi prolongeant le troisième coude en direction de la première arête et s'étendant au-delà de cette première arête de manière à fermer la section en U et à se prolonger au-delà de la section principalement rectangulaire ainsi obtenue.

La structure tubulaire peut être une structure extrudée.

L'invention propose aussi un procédé de réalisation d'une telle traverse avant comprenant les étapes suivantes :
- Extrusion de métal selon une section principalement rectangulaire, au moins une paroi se prolongeant au delà de cette section ;
- Poinçonnage de la paroi se prolongeant au delà de la section principalement rectangulaire ;
- Découpage de portions du prolongement de manière à obtenir des pattes s'étendant au-delà de la section principalement rectangulaire.

Enfin l'invention propose une série de telles traverses extrudées dont au moins deux traverses obtenues par la même extrudeuse possèdent des portions découpées différentes.

D'autres caractéristiques et avantages de l'invention apparaîtront à la lecture de la description qui va maintenant en être faite en se référant aux dessins annexés, sur lesquels :
La figure 1 est une vue en perspective de la traverse de l'invention pour un premier modèle de véhicule ;
La figure 2 est une vue en perspective d'une variante de la traverse de la figure 1 pour un second modèle de véhicule ;
La figure 3 est une vue en coupe selon l'axe III-III de la traverse de la figure 2.

Les références utilisées dans toute la description sont les mêmes pour désigner des éléments identiques ou similaires, quant à leur fonction, quelques soit la variante de réalisation de l'invention.

En référence aux figures, une traverse avant 10 est fixée par l'intermédiaire de structures déformables 12 à l'extrémité antérieure des longerons (non représentés) d'un véhicule automobile.

Dans cet exemple, la traverse 10 est soudée aux structures déformables mais d'autres types de fixations usuelles peuvent être utilisées notamment le boulonnage.

La traverse 10 est réalisée en tôle métallique comme de l'acier ou de l'aluminium dont l'épaisseur est ici comprise à titre d'exemple entre 2 et 5 millimètres.

La tôle est mise en forme de manière à obtenir une structure tubulaire permettant de supporter les efforts engendrés notamment lors d'une collision frontale avec un autre véhicule.

Ainsi la traverse 10 comporte une paroi supérieure 14 et une paroi inférieure 18 reliées entre elles par une paroi avant 16 et une paroi arrière 20, de manière à ce que la structure tubulaire de la traverse 10 présente une section sensiblement rectangulaire.

Une portion 22 de la paroi arrière 20 de la traverse 10 se prolonge sensiblement verticalement au-delà de la paroi supérieure 14 afin d'obtenir une ailette le long de l'arête 24 entre la paroi supérieure 14 et la paroi arrière 20 de la traverse 10. Cette portion 22 peut toutefois s'étendre en formant un angle par rapport à la paroi arrière 20.

Cette ailette comporte des zones découpées 26 de manière à ce que les zones non découpées forment des pattes 28.

Des orifices 30 sont réalisées dans les pattes 28 pour permettre la fixation de différents accessoires (non représentés) sur la traverse 10 grâce aux pattes perforées 28. La forme et la taille de ces orifices 30 varient suivant le type d'accessoire à fixer comme par exemple un avertisseur sonore, un projecteur lumineux, du câblage ou une conduite d'air.

La mise en forme de la tôle formant la traverse 10 peut être réalisée par pliage, par extrusion ou tout autre moyen de formage.

Dans cet exemple, le procédé d'extrusion permet d'obtenir une section fermée avec une ailette.

La section fermée comprend une section en U de la traverse dont la paroi supérieure 14 s'étend horizontalement d'une première arête 24 de la traverse vers un premier coude 32, la paroi avant 16 s'étend verticalement du premier coude 32 vers un second coude 34 et la paroi inférieure 18 s'étend horizontalement du second coude 34 vers un troisième coude 36 de la traverse.

La paroi arrière 20 de la traverse s'étend verticalement du troisième coude 36 en direction de la première arête 24 de la traverse de manière à fermer la section U et former ainsi une section rectangulaire.

De plus, une portion 22 de la paroi arrière 20 s'étend verticalement au delà de la première arête 24 afin d'obtenir une ailette le long de ladite arête 24 entre la paroi supérieure 14 et la paroi arrière 20.

Une découpe, par exemple au laser, de certaines portions 26 de l'ailette 22 permet aux portions non découpées de l'ailette de former des pattes 28.

Des perforations ou poinçonnages sont ensuite réalisés dans les pattes afin d'obtenir des orifices 30 permettant la fixation d'accessoires comme un avertisseur sonore, un projecteur lumineux, du câblage ou une conduite d'air.

D'autres procédés de réalisation de la traverse 10 sont envisageables notamment par pliage ou laminage de la tôle formant la structure tubulaire de la traverse 10.

Un des avantages d'une telle traverse est de ne pas utiliser d'autre organe pour la fixation des accessoires permettant ainsi un gain de poids, de rapidité de montage et surtout limitant le nombre de pièce sur la face avant du véhicule permettant une meilleure circulation de l'air de refroidissement vers radiateur du moteur.

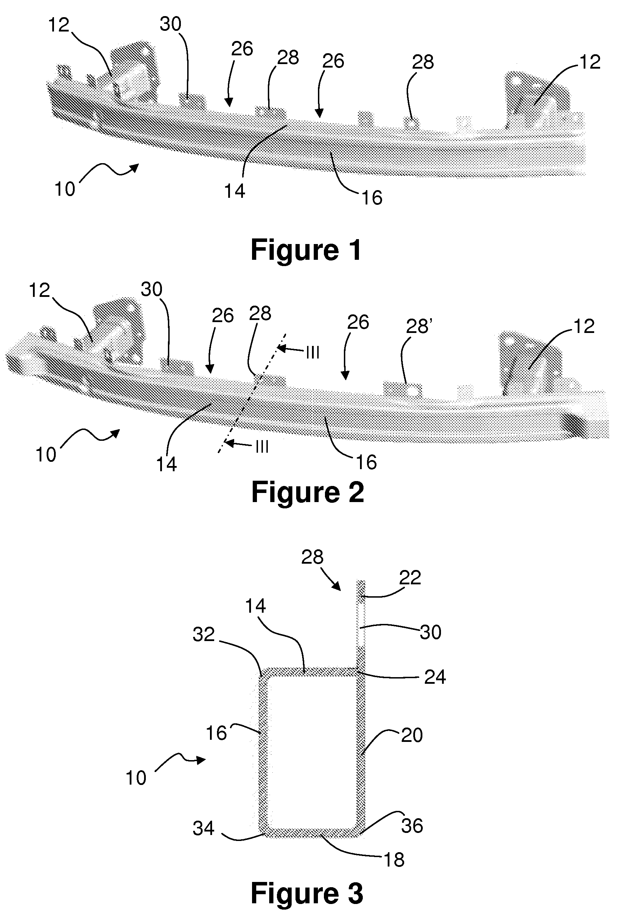

Une telle traverse peut aussi s'adapter à différente configuration de véhicule. Une première configuration est représentée à la figure 1 et une seconde configuration à la figure 2.

Les accessoires à fixer sur la traverse 10 de la première configuration sont différents de ceux à fixer sur la traverse 10 de la figure 2. Par conséquent les pattes de fixation 28 sont différentes dans ces deux configurations.

Les réalisations des deux configurations de traverse 10 comportent les mêmes étapes de fabrication, seules la découpe des zones 26 et les perforations sont différentes dans les deux variantes. Par exemple, une patte de fixation différente 28' de la figure 2 a été réalisée par des découpes et perforations différentes.

Ainsi l'invention permet avantageusement une réalisation adaptable de traverses 10 pouvant fournir des séries de traverses dont les pattes de fixation conviennent aux différentes configurations possibles de véhicule. Ainsi les différentes traverses peuvent être obtenues par un procédé de fabrication utilisant une même machine permettant d'obtenir la structure tubulaire commune à toutes les traverses, et une même machine permettant la découpe en modifiant soit l'outil de découpe soit l'algorithme de la machine par exemple dans le cas d'une découpe au laser.

## Revendications

1. Traverse avant (10) de véhicule automobile destinée à être fixée par l'intermédiaire de structures déformables (12) à l'extrémité antérieure des longerons du véhicule, **caractérisée en ce que** la traverse (10) comprend une structure tubulaire en tôle mise en forme de manière à obtenir une section principalement rectangulaire, et **en ce qu'** une paroi arrière (20) de la traverse (10) possède une portion (22) se prolongeant au-delà de la section principalement rectangulaire de la structure tubulaire de la traverse (10), sensiblement verticalement au-delà de la paroi supérieure (14), formant une ailette le long de la traverse, l'ailette possédant des perforations (30) permettant la fixation d'accessoires.

2. Traverse (10) selon la revendication 1, **caractérisée en ce que** l'ailette possède des zones découpées (26) de manière à obtenir au moins une patte de fixation (28) entre ces zones découpées.

3. Traverse (10) selon une des revendications précédentes, **caractérisée en ce que** la traverse présente trois parois formant une section en U dont une première paroi (14) s'étendant d'une première arête (24) de la traverse vers un premier coude (32) de la traverse, une seconde paroi (16) prolongeant le premier coude (32) vers un second coude (34) de la traverse et une troisième paroi (18) prolongeant le second coude (34) vers un troisième coude (36) de la traverse, et **en ce que** la traverse présente aussi une quatrième paroi (20) prolongeant le troisième coude (36) en direction de la première arête (24) et s'étendant au-delà de cette première arête de manière à fermer la section en U et à se prolonger au-delà de la section principalement rectangulaire ainsi obtenue.

4. Traverse (10) selon une des revendications précédentes, **caractérisée en ce que** la structure tubulaire est réalisée par pliage.

## Patentansprüche

1. Vorderer Querträger (10) für ein Kraftfahrzeug, der mittels verformbarer Strukturen (12) am vorderen Ende der Längsträger des Fahrzeugs befestigt werden soll, **dadurch gekennzeichnet, dass** der Querträger (10) eine rohrförmige Blechstruktur umfasst, die dahingehend geformt ist, einen im Wesentlichen rechteckigen Querschnitt zu erhalten, und dass eine hintere Wand (20) des Querträgers (10) einen Abschnitt (22) aufweist, der sich über den im Wesentlichen rechteckigen Querschnitt der rohrförmigen Struktur des Querträgers (10) hinaus, im Wesentlichen vertikal über die obere Wand (14) hinaus, ausdehnt, wodurch eine Rippe entlang des Querträgers gebildet wird, wobei die Rippe Perforationen (30) aufweist, die eine Befestigung von Zubehörteilen gestatten.

2. Querträger (10) nach Anspruch 1, **dadurch gekennzeichnet, dass** die Rippe ausgeschnittene Bereiche (26) zum Erhalt mindestens einer Befestigungslasche (28) zwischen den ausgeschnittenen Bereichen aufweist.

3. Querträger (10) nach einem der vorhergehenden Ansprüche, **dadurch gekennzeichnet, dass** der Querträger drei Wände aufweist, die einen U-förmigen Querschnitt bilden, wobei sich eine erste Wand (14) von einem ersten Rand (24) des Querträgers zu einer ersten Biegung (32) des Querträgers erstreckt, eine zweite Wand (16) die erste Biegung (32) zu einer zweiten Biegung (34) des Querträgers hin verlängert und eine dritte Wand (18) die zweite Biegung (34) zu einer dritten Biegung (36) des Querträgers hin verlängert, und dass der Querträger auch eine vierte Wand (20) aufweist, die die dritte Biegung (36) in Richtung des ersten Rands (24) verlängert und sich über diesen ersten Rand hinaus erstreckt, um den U-förmigen Querschnitt zu schließen und sich über den so erhaltenen im Wesentlichen rechteckigen Querschnitt hinaus auszudehnen.

4. Querträger (10) nach einem der vorhergehenden Ansprüche, **dadurch gekennzeichnet, dass** die rohrförmige Struktur durch Falzen hergestellt wird.

## Claims

1. Motor vehicle front crossmember (10) intended to be fastened via deformable structures (12) to the front end of the side rails of the vehicle, **characterized in that** the crossmember (10) comprises a sheet-metal tubular structure shaped so as to obtain a mainly rectangular cross section, and **in that** a rear wall (20) of the crossmember (10) has a portion (22) extending beyond the mainly rectangular cross section of the tubular structure of the crossmember (10), substantially vertically beyond the upper wall (14), forming a fin along the crossmember, the fin having perforations (30) allowing the fastening of accessories.

2. Crossmember (10) according to Claim 1, **characterized in that** the fin has cut-out regions (26) so as to obtain at least one fastening tab (28) between these cut-out regions.

3. Crossmember (10) according to either of the preceding claims, **characterized in that** the crossmember has three walls forming a U-shaped cross section, including a first wall (14) extending from a first edge (24) of the crossmember towards a first elbow (32) of the crossmember, a second wall (16) extending the first elbow (32) towards a second elbow (34) of the crossmember, and a third wall (18) extending the second elbow (31) towards a third elbow (36) of the crossmember, and **in that** the crossmember also has a fourth wall (20) extending the third elbow (36) in the direction of the first edge (24) and passing beyond this first edge so as to close the U-shaped cross section and to extend beyond the mainly rectangular cross section thus obtained.

4. Crossmember (10) according to one of the preceding claims, **characterized in that** the tubular structure is produced by folding.
